# EUROPEAN PATENT SPECIFICATION

(11) **EP 0 857 136 B1**
(45) Date of publication and mention of the grant of the patent: **04.06.2003**
(21) Application number: 97935777.9
(22) Date of filing: 14.08.1997
(51) Int. Cl.: B62K 3/00

(54) **BICYCLE AND THE LIKE WITH CHAIN TRANSMISSION, MULTIPLE GEARS AND PEDAL UNIT PLACED ON THE OUTSIDE OF THE REAR WHEEL**
FAHRRAD ODER DERGLEICHEN MIT EINEM KETTENANTRIEB, EINER SCHALTUNG UND EINER AUSSERHALB DES HINTERERRADES GELEGENEN PEDALEINHEIT
BICYCLETTE, OU APPAREIL SIMILAIRE, MUNIE D'UNE CHAINE DE TRANSMISSION, D'UN DERAILLEUR ET D'UN PEDALIER PLACES SUR L'EXTERIEUR DE LA ROUE ARRIERE

(30) Priority: 05.09.1996 IT FR960011; 12.02.1997 IT FR970003
(43) Date of publication of application: 12.08.1998
(73) Proprietor: Farina, Ernesto, 03039 Sora (IT)
(72) Inventor: Farina, Ernesto, 03039 Sora (IT)
(74) Representative: Iannone, Carlo Luigi
(86) International application number: IT9700213
(87) International publication number: WO98009866

(56) References cited:
- DE-A- 4 124 292
- DE-U- 8 614 882
- FR-A- 2 483 349
- GB-A- 1 300 566
- US-A- 4 981 306
- US-A- 5 403 027
- SOVIET PATENT ABSTRACTS Week 9240 18 November 1992 Derwent Publications Ltd., London, GB; AN 92-329565 XP002051292 & SU 1 698 123 A (RAIKIN) , 15 December 1991

## Description

The invention concerns a bicycle and the like with chain transmission, multiple gears and pedals placed on the outside of the rear wheel which : -improves the functioning of the cyclist's organs and consequently energy output; -makes a vehicle with efficient mechanical and aerodynamic characteristics and, last but not least, a vehicle nice to look at. The vehicle has been conceived by the conviction that the driver's sitting position, typical on the traditional bicycle, does not anatomically present an optimum functioning of all those organs which work in order to get a maximum output.

By carefully analysing the traditional bicycle we deduce that during the maximum angle-shot of the bust, the intrabaominal viscera compression, which is due to the reduction of space into the abdominal cavity, increases the abdominal pressure and, consequently, raises diaphragm; the so-called "Valsalva" phenomenon, which is the increase of the intrabdominal pressure, hampers the venous return of blood in limbs prejudging the hemodynamic and metabolic aspects ; even an organism in very good health can endure this situation for a short time without running into serious metabolic repercussion. By analysing the breathing aspect of an athlete on a traditional bicycle we can see that: - the raising of the diaphragm (a very important breathing muscle)during the maximum bust angle-shot causes a reduced pulmonary excursion with a reduction of oxygenation, of venous and lymphatic return, and consequently reduces the power efficiency. By analysing the leg musculature and its functioning on traditional bicycles we notice that part of the energy produced by muscles is utilised to push the traction pedal and that, at the same crime, it takes a considerable waste of energy to raise the other limb again. Considering the leg muscles and their functions during the pedalling phase we notice that the traction push on pedals is due to the M. Femoral Quadriceps and that all the remaining leg muscles carry out a very small function of traction (they mainly help raising the leg again before another traction push). For all these reasons the traditional bicycle implies a "non-optimal" distribution of the muscular work of the limbs, thereby prejudging the energy output of leg muscles.

Document GB-A-1 300 556 discloses a bicycle having the axis of the pedal unit located rearwardly and near the very rear end of the rear wheel, in order to allow a rider to lie in a prone position so as to increase his aerodynamic penetration.

The object of the invention is to provide a bicycle which allows the driver to assume a position anatomically optimised for muscle power efficiency and aerodynamic penetration, having stability and balance during pedalling and that can be easily mounted and operated. The invention is defined by a bicycle according to claim 1.

The advantages of the velocipede I conceived are the following : with this new bicycle the posterior thigh muscles (Femoral Biceps, M. Half-tendinous, M. Half-membranous, M.Psoas and partly the long adductor), working without gravitational effort, turn the energy wasted to lift the gravitational weight of limbs during the pedalling phase into energy of traction. In addition to that, all those leg muscles, which were totally unused with the traditional bicycle, play a considerable role in respect to this new velocipede. They, in fact, optimise the push on pedals thanks to the function of foot extension and flexion ; the legs' muscular work does not coincide, like it usually does for traditional bicycles, with the dead centre of the pedalling phase and therefore allows a valid push on pedals.

In brief the distribution of legs' muscular work considering the action of the gravity force will be undoubtedly more harmonious. This condition will improve the venous and lymphatic circulation thanks to a better muscular pump function, facilitating the driver's cardio-circulatory functions. These are the scientific presuppositions for the improvement that this new vehicle brings to the respiratory, muscular and cardiac-circulation apparatus. We will now analyse the disadvantageous mechanical aspects of the traditional bicycle: the experts, trying to get the best possible performances with a pedal traction vehicle, have always concentrated their efforts, and they always will, mainly upon the improvement of the aerodynamic factor; from this point of view the sitting position is the greatest weakness of the traditional bicycle.

On the new bicycle the driver is stretched out with his legs stretched backwards. Thanks to that he can easily take a lying flat prone position which is the best thing one can do in order to improve the aerodynamic penetration. Last but not least, the roadholding and the stability of traditional bicycles can be improved considerably. Bearing these considerations in mind, I have been trying to solve all these problems without disregarding any of the details which could be improved and I have carried out all the innovations I am proposing with the velocipede I have invented. After due considerations I frankly think it is a first-rate vehicle with an excellent energy efficiency and an extremely pleasant design.

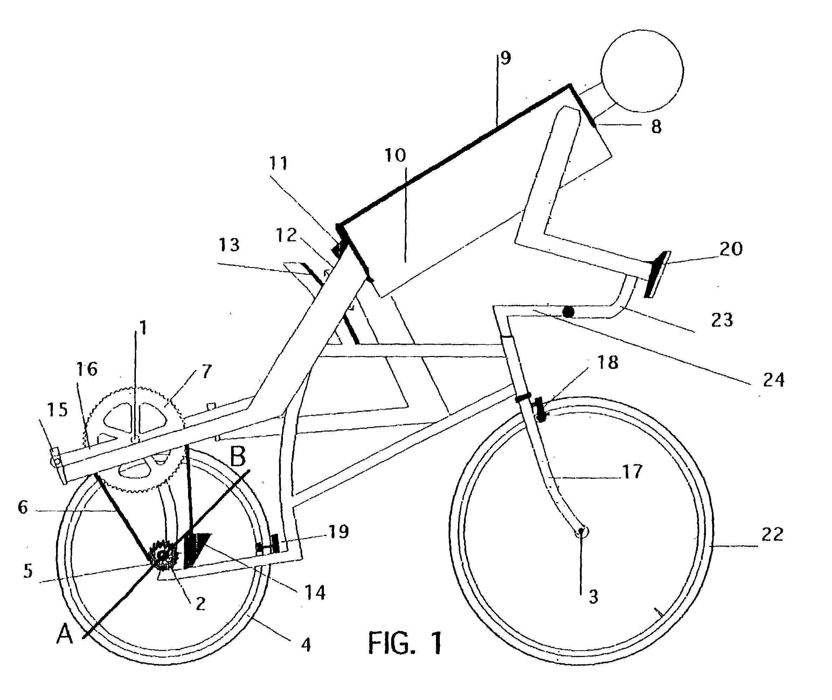

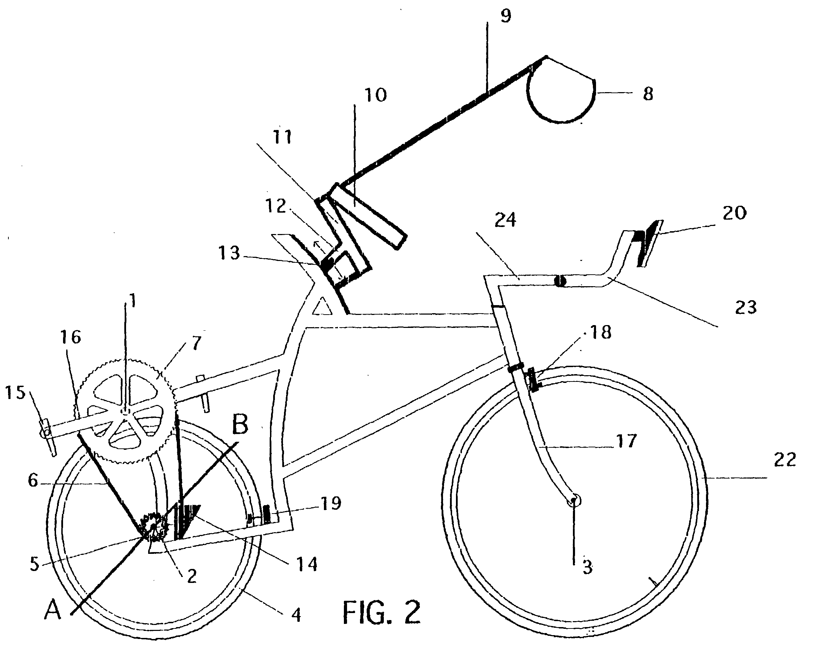

This bicycle introduces so many important innovations - the aerodynamic factor, stability, roadholding, energy output - that it is certainly very interesting and totally innovative as a result of all the improvements brought to the obsolete traditional bicycle. By analysing every single improvement and innovation which has been made, we notice that this velocipede will allow the cyclist an extremely aerodynamic position Fig.1, with a minimum aerodynamic impact of both the driver and the means of transport. It will utilise smaller wheels 4 of different diameter even on the same vehicle without detrimental effects on its speed, on the contrary these wheels will reduce the weight of the vehicle and improve its stability by lowering the centre of gravity. Besides, weight will be equally distributed on both wheels (function performed by the balancer Fig. 2) with an advantage for roadholding capacity. In addition to that, this vehicle allows pedalling even while turning which results in considerable traction and roadholding capacity. I believe that the most important advantage is the aerodynamic one which, together with the new position of the driver, makes of this vehicle the very best improvement that can be made on this old means of transportation.

The innovation was born from the willingness to create a velocipede with high qualitative standards where the driver would be in a condition of maximum physical efficiency and where he could take the best aerodynamic position. It was necessary to find a way of supporting the cyclist's mass without compromising the stability of the vehicle and the functioning of cardiac-circulation and breathing. The following solutions were found. The first thing to consider was the driver's position ; it had to be changeable and as comfortable as possible in order not to tire out the cyclist ( any position even the most comfortable one can't be kept for long ). The position is confined: the trunk must be stretched out and the limbs stretched backwards.

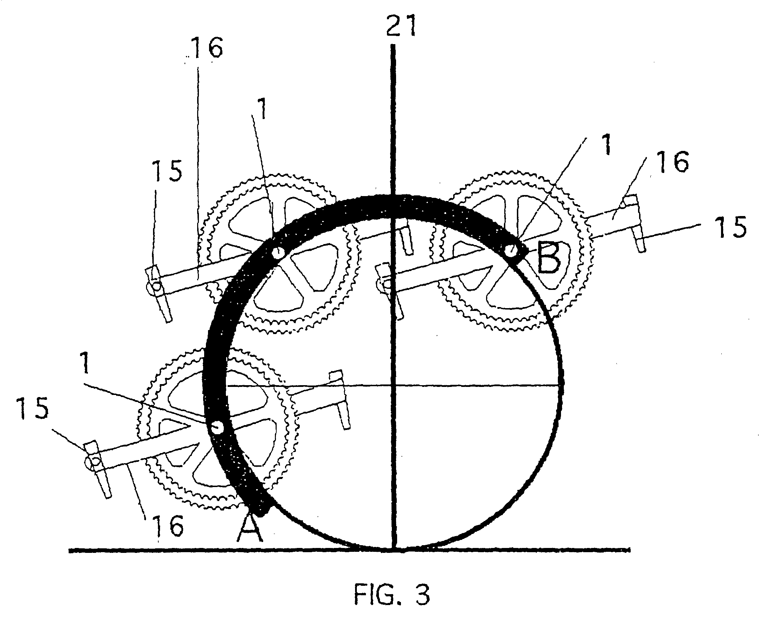

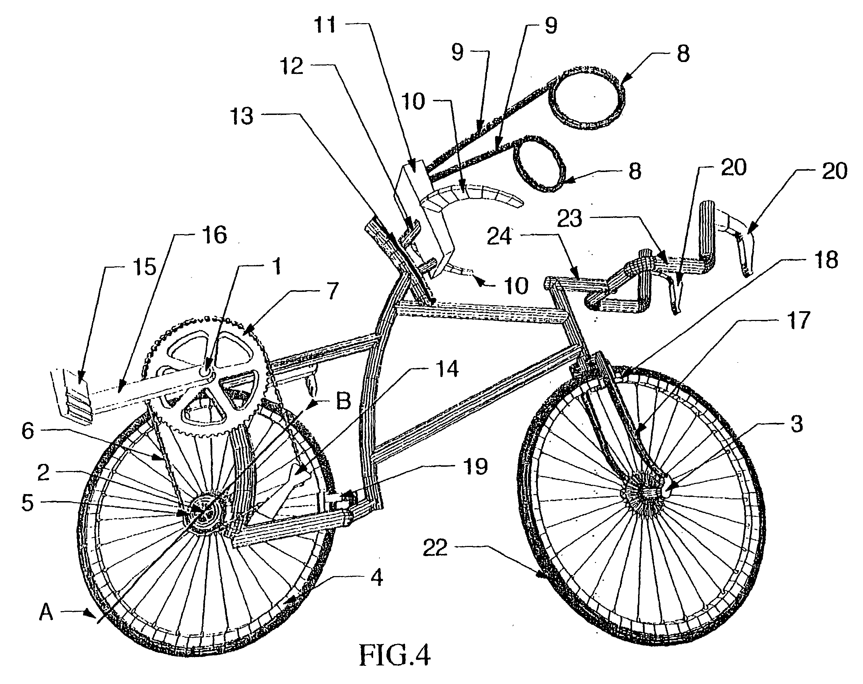

By analysing the possible supporting points of the trunk we notice that the ones which allow to keep breathing easily are: the scapular-humeral articulation ( axillary region 8), the upper median part of bust ( sternal and parasternal regions ); setting great store by all I have said it was possible to create a special track suit called "bilanciere"' Fig.4 or balancer with specific traction on those points mentioned above, allowing a very comfortable and stable position; arms and forearms work solely in order to change the position and get the most favourable one. Another important support is the gluteal region 11 which is tilted and is always about to glide especially when the cyclist's trunk is stretched out in order to take the position of maximum aerodynamic penetration. To solve this problem it was necessary to create towards this new saddle an attraction similar to the one that we have towards the traditional saddle thanks to gravity. Through the balancer Fig. 4 the gravity force which bears down on the driver's trunk is turned into a push on the saddle 11 of the new vehicle. This conditions will assure a valid support for the pelvis weight, preventing the body from going onwards during the shove on pedals ; this effect has been obtained by creating a special track suit in order to get a correct traction between shoulder and saddle while the driver is taking the maximum aerodynamic position. This apparatus has been called "Balancer". It is able to support driver's bust exploiting the gravity force; A fastening with a rapid unhooking 12 ( like the one of the pedals ) fastens the "Balancer" to the velocipede ; the special track suit, into which can be vulcanised the balancing apparatus, harmonises these structures. The balancer is made of material which efficaciously supports the driver's body and is flexible, light and practical (it can be made of different materials such as fiberglass and other flexible materials or compressed air pumped into tubular structures which are part of the track suit) ; it is positioned on the back of the driver Fig. 2. The different semirigid materials (carbon, fiberglass etc.) work from the gluteus region to shoulders comfortably supporting the driver ; the structure allows a stable and comfortable driving in any given position, the balancer runs on a special guide going from 80 cm. to 120 cm. (13). Even in the most aerodynamic position, when the bust is more or less parallel to the ground, the effect of the track suit, with i ts flexible traction (shoulder-saddle) and concerning supports (-the upper part of the bust mainly supported by the axillary region; - the lower part of bust mainly supported by gluteus and hips), preventing the body from falling down allow to support the body in the best way and free the arms without compromising vehicle stability. In brief the supporting points of the driver are: - legs on pedals 15; - thighs and gluteus on the anatomical new saddle 11; - thorax and shoulders on the track suit with axillary supporting 8 or a corset with anatomical shoulder pads; - arms and forearms on handlebar 23. The means of transport turned out to be light, stable and easy to drive without compromising the driver's position and the output of energy. Its characteristics are certainly very interesting. The velocipede is extremely original, light and fast. Stability is assured by the position of pedals Fig. 3, situated close to the perpendicular line 21 to the ground, passing through the hub 2 of the rear wheel 4 which prevents the bicycle from swaying even when pedalling vigorously. The position of the pedal unit, which creates a ground-hub block, guarantees the stability of the bicycle. In brief, in this velocipede the contact of the rear wheel with the ground is not a point of fulcrum but a point of resistance towards pedals swaying and bicycle's direction changes, preventing oscillations during the pedalling phase to be transmitted to the wheels. The invention originates from the intuition of the new position of pedals Fig. 1 , the axes of the central movement 1 of the pedal unit is always placed on the outside of the rear wheel in a variable angle, within the area bounded by points **A** and **B** Fig.3. Points **A** and **B** are identified as follows: starting from the Cartesian Axes (abscissa and ordinate) having the hub of the rear wheel as an origin we divide this wheel into four equal quadrants (two lower quadrants and two upper quadrants or two external quadrants and two internal quadrants). The upper quadrants correspond to the upper 180 degrees of the rear wheel without any direct connection to the ground. The lower quadrants correspond to the lower 180 degrees of the rear wheel with direct connection to the ground. The external quadrants correspond to the outer 180 degrees of the rear wheel without any connection to all the remaining parts of this vehicle. The internal ones correspond to the inner 180 degrees of the rear wheel with direct connection to all the remaining parts of this vehicle. Point A is placed on the external circumference of the rear wheel and we get it by subdividing the lower external quadrant into two equal parts with a straight line passing through the hub. Point B is placed on the external circumference of the rear wheel and we get it by subdividing the upper internal quadrant into two equal parts with a straight line passing through the hub. All the mechanical aspects will present advantages due to the position of pedals Fig. 3 and of the driver Fig. 1. I assure an advantageous reduction of weight ; since the wheelbase (distance between points 2 and 3) is more or less unchanged compared to the traditional vehicle, the reduction of weight in this new bicycle is mainly due to the shorter diameter of both wheels and consequently of the whole vehicle. The compactness of the whole mechanism of transmission contributes to weight reduction. Having wheels in shorter diameter, (especially the rear one 4, this bicycle needs a very small free gear wheel 15 ( a eight/nine cogs wheel when you get into short gears and a twenty-eight/nineteen cogs wheel when you get into long ones ) to develop a proper length in metres; even the chain 6 is shorter and this is an additional advantage for the weight of the rotating parts. For example, in one of our first models with a twenty inches rear wheel 4 - 147 cm each revolution - we had to utilise a 65 cogs central movement and an eleven/eighteen cogs free gear wheel in order to get an eight/nine metres long chain and with this model we reached the speed of about 60 K.P.H. on a plain surface (without being professionals). In brief, the balancing apparatus Fig. 2 is definitely efficient and allows a comfortable and solid driving position. The bicycle is light, stable, easy to drive, has a very good roadholding quality. Lastly, we are satisfied with the look of the bicycle, even if this aspect can be improved.

## Claims

1. Bicycle, comprising:
- a front wheel (22) rotatably mounted on a first hub (3),
- a rear wheel (4) rotatably mounted on a second hub (2),
- a first sprocket (5) on a first axis, wherein the first axis passes through the second hub (2) of the rear wheel (4), and
- a pedal unit including two pedals (15) and a second sprocket (7) drivingly connected with the first sprocket (5), wherein the second sprocket (7) is rotatably mounted on a second axis (1) which is parallel with the first axis and located outside of the rear wheel (4),
the bicycle being **characterised in that** the second axis (1) is located within an angle between ± 45° with respect to a line (21) passing through the second hub (2) and extending perpendicular from a surface on which the front wheel (22) and the rear wheel (4) rest.

2. Bicycle according to claim 1, **characterised in that** it further includes a seat guide (13) for movably holding a seat member (11) such that the seat member (11) is adjustable to different heights above the surface upon which the front wheel (22) and the rear wheel (4) rest.

3. Bicycle according to claim 2, **characterised in that** the seat member (11) is removably fastened to the seat guide (13) such that the seat member (11) and the seat guide (13) can be unfastened from one another.

4. Bicycle according to claim 2 or 3, **characterised in that** a top surface of the seat member (11) supporting a gluteus region of the driver is arranged at an angle between vertical and horizontal such that the gluteus region of the driver is supported without placing the driver in a sitting position.

5. Bicycle according to any one of the claims 2 to 4, **characterised in that** it further includes a first support member (10), extending forward with respect to the seat member (11), for supporting hips of the driver.

6. Bicycle according to any one of the claims 2 to 4, **characterised in that** it further includes a second support member (8, 9), extending forward with respect to the seat member (11), for supporting an axillary or sternal region of the driver.

7. Bicycle according to any one of the preceding claims, **characterised in that** the rear wheel (4) has a diameter smaller than the diameter of the front wheel (22).

## Patentansprüche

1. Fahrrad, umfassend:
- ein drehbar auf einer ersten Nabe (3) angebrachtes Vorderrad (22),
- ein drehbar auf einer zweiten Nabe (2) angebrachtes Hinterrad (4),
- einen ersten Zahnkranz (5) auf einer ersten Achse, wobei die erste Achse durch die zweite Nabe (2) des Hinterrades (4) führt, und
- eine Pedaleinheit einschließlich zweier Pedale (15) und einen zweiten Zahnkranz (7), der mit dem ersten Zahnkranz (5) antreibend verbunden ist, wobei der zweite Zahnkranz (7) drehbar auf einer zweiten Achse (1) angeordnet ist, die parallel zu der ersten Achse und außerhalb des Hinterrades (4) angeordnet ist,
**dadurch gekennzeichnet daß**, die zweite Achse (1) angeordnet ist in einem Winkel von + 45° bezogen auf eine Linie (21), die durch den zweiten Zahnkranz (2) verläuft, und senkrecht ausgeht von einer Oberfläche, auf der das Vorderrad (22) und das Hinterrad (4) stehen.

2. Fahrrad nach Anspruch 1, **dadurch gekennzeichnet, daß** es außerdem eine Sitzführung (13) aufweist für die Aufnahme eines beweglichen Sitzteils (11), so daß das Sitzteil (11) auf verschiedene Höhen oberhalb der Oberfläche, auf der das Vorderrad (22) und das Hinterrad (4) stehen, einstellbar ist.

3. Fahrrad nach Anspruch 2, **dadurch gekennzeichnet, daß** das Sitzteil (11) abnehmbar an der Sitzführung (13) befestigt ist, so daß das Sitzteil (11) und die Sitzführung (13) von einander lösbar sind.

4. Fahrrad nach einem der Ansprüche 2 oder 3, **dadurch gekennzeichnet, daß** eine nach oben weisende Oberfläche des Sitzteils (11), die eine Gluteusregion des Fahrers unterstützt, in einem Winkel zwischen der Vertikalen und Horizontalen derart angeordnet ist, daß die Gluteusregion des Fahrers gestützt wird, ohne den Fahrer in eine sitzende Position zu bringen.

5. Fahrrad nach einem der Ansprüche 2 bis 4, **dadurch gekennzeichnet, daß** es außerdem ein erstes Stützelement (10) für die Stützung der Hüften des Fahrers aufweist, das sich, in Bezug auf das Sitzteil (11), nach vorne erstreckt.

6. Fahrrad nach einem der Ansprüche 2 bis 4, **dadurch gekennzeichnet, daß** es außerdem ein zweites Stützelement (8, 9) für die Stützung der Achsel- bzw. Brustbeinregion des Fahrers aufweist, daß sich, in Bezug auf das Sitzteil (11), nach vorne erstreckt.

7. Fahrrad nach einem der vorhergehenden Ansprüche, **dadurch gekennzeichnet, daß** das Hinterrad (4) einen kleineren Durchmesser als das Vorderrad (22) hat.

## Revendications

1. Bicyclette, comprenant:
- une roue avant (22) montée à rotation sur un premier moyeu (3),
- une roue arrière (4) montée à rotation sur un deuxième moyeu (2),
- un premier pignon à chaîne (5) sur un premier axe, le premier axe passant à travers le deuxième moyeu (2) de la roue arrière (4), et
- un pédalier comportant deux pédales (15) et un deuxième pignon à chaîne (7) relié au premier pignon à chaîne (5) par une liaison d'entraînement, le deuxième pignon à chaîne (7) étant monté à rotation sur un deuxième axe (1) qui est parallèle au premier axe et est positionné à l'extérieur de la roue arrière (4),
la bicyclette étant **caractérisée en ce que** le deuxième axe (1) est positionné dans les limites d'un angle de ± 45° par rapport à une droite (21) passant par le deuxième moyeu (2) et s'étendant perpendiculairement à une surface sur laquelle la roue avant (22) et la roue arrière (4) reposent.

2. Bicyclette selon la revendication 1, **caractérisée en ce qu'**elle comporte, en outre, un guide de siège (13) destiné à maintenir un élément formant siège (11) dans une position déplaçable, afin que l'élément formant siège (11) soit réglable à des hauteurs différentes au-dessus de la surface sur laquelle la roue avant (22) et la roue arrière (4) reposent.

3. Bicyclette selon la revendication 2, **caractérisée en ce que** l'élément formant siège (11) est fixé de façon amovible au guide de siège (13), afin que l'élément formant siège (11) et le guide de siège (13) puissent être désolidarisés l'un de l'autre.

4. Bicyclette selon la revendication 2 ou 3, **caractérisée en ce qu'**une surface supérieure de l'élément formant siège (11), qui supporte une région fessière du conducteur, est disposée suivant un angle se situant entre la verticale et l'horizontale, afin que la région fessière du conducteur soit supportée sans placement du conducteur dans une position assise.

5. Bicyclette selon l'une quelconque des revendications 2 à 4, **caractérisée en ce qu'**elle comporte, en outre, un premier élément de support (10) s'étendant vers l'avant par rapport à l'élément formant siège (11), pour supporter les hanches du conducteur.

6. Bicyclette selon l'une quelconque des revendications 2 à 4, **caractérisée en ce qu'**elle comporte, en outre, un deuxième élément de support (8, 9) s'étendant vers l'avant par rapport à l'élément formant siège (11), pour supporter une région axillaire ou sternale du conducteur.

7. Bicyclette selon l'une quelconque des revendications précédentes, **caractérisée en ce que** la roue arrière (4) a un diamètre inférieur au diamètre de la roue avant (22).
